Europäisches Patentamt

European Patent Office

Office européen des brevets

(19)

(11) Veröffentlichungsnummer: **0 253 097**
**A1**

(12) ## EUROPÄISCHE PATENTANMELDUNG

(21) Anmeldenummer: **87107115.5**

(22) Anmeldetag: **16.05.87**

(51) Int. Cl.⁴: **G 01 F 1/28, G 01 P 5/04**

(30) Priorität: **17.05.86 DE 3616777**
   **01.04.87 DE 3710836**

(43) Veröffentlichungstag der Anmeldung: **20.01.88**
   **Patentblatt 88/3**

(84) Benannte Vertragsstaaten: **AT BE CH DE ES FR GB GR IT LI LU NL SE**

(71) Anmelder: **Kohn, Dietmar, Dr., Schmiedgasse 6, D-7952 Bad Buchau (DE)**

(72) Erfinder: **Schillinger,Jakob,Dr., Kornstrasse 29, D-8068 Pfaffenhofen (DE)**
   Erfinder: **Kohn,Dietmar,Dr., Schmiedgasse 6, D-7952 Bad Buchau (DE)**
   Erfinder: **Frank,Peter, Glonner Strasse 7, D-8011 Putzbrunn (DE)**
   Erfinder: **Parzhuber,Otto,Dipl.-Ing., Sonnenmoosstrasse 43, D-8183 Rottach/Egern (DE)**

(74) Vertreter: **Steinmann, Otto C. et al, Kanzlei Dres. Münich, Neidl-Stippler, Schiller, Willibaldstr.36/38, D-8000 München 21 (DE)**

(54) **Einrichtung zur Messung des Massenimpulsstroms eines strömenden Mediums.**

(57) Beschrieben wird eine Einrichtung zur Messung des Massenimpulsstroms eines strömenden Mediums mit einem Mess-Element (2), das in das strömende Medium eingesetzt ist, und das durch das strömende Medium ausgelenkt bzw. verformt wird, einem Referenzelement (3), das im Strömungsweg wenigstens teilweise hinter dem Mess-Element (2) angeordnet ist, und einem Sensor (4), der zur Bestimmung des Massenimpulsstroms den Abstand zwischen dem Mess-Element und Referenzelement erfasst. Die erfindungsgemässe Einrichtung zeichnet sich dadurch aus, dass das Mess-Element (2) eine Formgebung aufweist, die eine Verformung des Referenzelements (3) durch die Strömung im wesentlichen verhindert.

Einrichtung zur Messung des Massenimpulsstroms eines
strömenden Mediums

B e s c h r e i b u n g

Die Erfindung bezieht sich auf Einrichtungen zur Messung
des Massenimpulsstroms eines strömenden Mediums gemäß dem
Oberbegriff des Patentanspruchs 1.

Eine derartige Einrichtung ist beispielsweise aus der DE-
OS 29 29 528 bekannt. Bei dieser bekannten Einrichtung zur
Messung des Massenimpulsstroms bildet eine verformbare
Platte, die als Meß-Element dient, eine Platte eines Plattenkondensators, dessen zweite Platte eine vollständig im strömenden Medium befindliche Referenzplatte bildet, die
in Strömungsrichtung hinter der Meß-Platte angeordnet ist.
Die Verformung der Meß-Platte bewirkt eine Kapazitätsänderung, die gemäß der DE-OS 29 29 528 aus der Frequenzänderung eines Schwingkreises bestimmt wird.

Ähnliche Einrichtungen sind aus der DE-PS 28 02 830, der
DE-OS 31 38 985, der US-PS 3 232 288 oder dem DBGM 69 23
285 bekannt.

Diese bekannten Einrichtungen haben jedoch - wie erfindungsgemäß erkannt worden ist - eine Reihe von Nachteilen:

Im Bereich der Einspannung der Meß-Platte beispielsweise
in einer Rohrwand bilden sich im Laufe der Betriebszeit
Ablagerungen, die die Kapazität des Meßkondensators verändern.

Hierdurch ergeben sich im Laufe der Betriebszeit Meßfehler, deren Größe nur schwer abzuschätzen ist.

Ein weiterer Meßfehler ergibt sich bei den bekannten gattungsgemäßen Einrichtungen durch den Massenstrom, der auch
zwischen den Kondensatorplatten strömt, und der bei geladenen und/oder polarisierbaren Teilchen einen elektrischen
Stromfluß zwischen den Platten und damit eine Änderung der
Wechselstrom-Impedanz des Meßkondensators zur Folge hat.
Der Stromfluß zwischen den Platten ist zudem aufgrund von
Verwirbelungen etc. an den in etwa senkrecht im strömenden
Medium stehenden Platten zeitlich nicht konstant. Dieser
Meßfehler ist ebenfalls nur schwer abzuschätzen.

Vor allem aber wird das Referenzelement häufig ebenfalls
durch die Strömung verformt, und zwar insbesondere dann, wenn zwischen Referenzelement und Meß-Element Wirbel auftreten, die im übrigen auch eine ungleichmäßige Verformung
des Meß-Elements bewirken können.

Eine Einrichtung anderer Gattung zur Bestimmung der Richtung eines Massenimpulsstroms ist aus der DE-OS 32 31 928
bekannt. Bei dieser Einrichtung sind Widerstände zur
Messung der Strömungsgeschwindigkeit vorgesehen. Zur Bestimmung der Strömungsrichtung wird ein im wesentlichen
außerhalb des strömenden Mediums angeordneter Federkörper
verwendet, der mit einem im strömenden Medium angeordneten
Staukörper verbunden ist. Auf dem Federkörper ist ein
Dehnungsmeßstreifen aufgebracht, der die Biegung des Federkörpers und nicht des Staukörpers erfaßt, und dessen
Ausgangssignal qualitativ zur Bestimmung der Strömungsrichtung ausgewertet wird. Eine quantitative Auswertung
zur Messung des Massenimpulsstromes ist in dieser Druckschrift nicht angesprochen.

Ferner ist es bekannt, die durch die Strömung verursachte
Kraft mittels einer Turbine oder einer Klappe in eine
Drehbewegung umzuformen. Hierbei ist jedoch eine dem Verschleiß unterliegende mechanische Lagerung erforderlich.
Ferner wird die Meßgenauigkeit durch die in den Lagern
auftretenden Reibungskräfte beeinträchtigt.

Bekannt ist außerdem eine Vorrichtung, bei der die Auslenkung einer Quarzfiber durch die Strömung mittels eines an
der Rohraußenwand angebrachten optischen Systems erfaßt
wird. Nachteil dieses Aufbaus ist neben der aufwendigen
Optik auch die Tatsache, daß sowohl die Rohrwand als auch
das Medium lichtdurchlässig sein müssen.

Der Erfindung liegt die Aufgabe zugrunde, eine Einrichtung zur Messung des Massenimpulsstroms eines strömenden Mediums anzugeben, bei der durch Ablagerungen, elektrischen Stromfluß infolge des strömenden Mediums, Verformung des Referenzelement und/oder ungleichmäßige Verformung bzw. Auslenkung des Meß-Elements etc. keine Meßfehler auftreten.

Eine erfindungsgemäße Lösung dieser Aufgabe ist mit ihren Weiterbildungen in den Patentansprüchen gekennzeichnet.

Überaschenderweise kann zur Lösung der Aufgabe weiterhin von einer Einrichtung gemäß dem Oberbegriff des Anspruchs 1 ausgegangen werden. Durch die Merkmale des kennzeichnenden Teils des Anspruchs 1 wird erfindungsgemäß erreicht, daß die Strömung nicht an dem Referenzelement angreifen kann; ferner treten aufgrund der erfindungsgemäßen Ausbildung zwischen den beiden Elementen praktisch keine Verwirbelungen auf, die beispielweise Ablagerungen im Bereich der Einspannung erzeugen könnten, oder zu einer ungleichmäßigen Verformung der Elemente führen.

Das Meßelement kann eine verformbare Platte oder ein Rohr sein, in dessen Inneren sich das Referenzelement befindet (Anspruch 3). Erfindungsgemäß ist jedoch bei Verwendung einer Platte diese gemäß Anspruch 2 derart geformt, daß sie das Referenzelement gegenüber der Strömung "abschirmt". Bei Verwendung eines Rohrs als Meß-Element, in dessen Innerem das Referenzelement angeordnet ist, ist es besonders vorteilhaft, wenn das Rohr geschlossen ist, so daß das Referenzelement mit dem strömenden Medium nicht in Berührung kommt.

Das Meßelement kann einseitig oder beidseitig in dem Kanal bzw. dem Rohr, in dem das Medium strömt, eingespannt sein.

Auch kann das Referenzelement mit Federn, Versteifungen etc. in der Strömung aufgehängt, und das Meß-Element an dem Referenzelement befestigt sein.

In jedem Falle kann das Meßelement von der Strömung in etwa senkrecht oder unter einem Winkel angeströmt werden. Die zweite Möglichkeit hat den Vorteil der strömungsgünstigeren Anordnung, unter Umständen kann sich jedoch eine ungünstigere Sensorkennlinie ergeben.

Besonders vorteilhaft ist es gemäß Anspruch 4 ferner, wenn das Meß-Element aus mehreren Teilen bzw. Gliedern mit unterschiedlicher Biegefestigkeit besteht: Durch diese Ausbildung kann die Auslenkung des Meß-Elements beispielsweise durch Auswechseln einzelner Teile leicht an unterschiedliche Meßbereiche für den Massenimpulsstrom angepaßt werden.

Ein derartiger mehrgliedriger Aufbau läßt sich in konstruktiv einfacher Weise durch die Merkmale der Ansprüche 5 und 6 erzielen:

Die im Anspruch 5 beanspruchte Ausgestaltung führt dazu, daß sich das Meß-Element im wesentlichen im Bereich der Weichstelle, d.h. der Halterung bzw. Einspannung in einer Kanalwand verformt, während sich der restliche Teil des beispielsweise als Rohr oder als Platte mit "Strömungsablenkern" ausgebildeten Meß-Elements praktisch nicht verformt.

Im Anspruch 6 sind Möglichkeiten für die Ausbildung der "Weichstelle" gekennzeichnet. Durch diese Gestaltungen der Weichstelle ist nicht nur ein einfacher Aufbau, sondern auch eine leichte Anpassung der erfindungsgemäßen Einrichtung an unterschiedliche Meßprobleme und Meßbereiche möglich.

Insbesondere dann, wenn das Meß-Element als einseitig
geschlossenes Rohr ausgebildet ist, ist es besonders vorteilhaft, wenn im Bereich der Weichstelle eine Manschette
vorgesehen ist, die den Eintritt das Mediums in das Rohrinnere und damit zum Referenzelement verhindert. Damit
stellen sich beispielsweise die bei den bekannten Einrichtungen aufgrund des zwischen den Platten strömenden Mediums auftretenden Probleme nicht.

Eine Ausbildung der Manschette ist im Anspruch 8 gekennzeichnet.

Durch die im Anspruch 9 gekennzeichnete Ausbildung des
Meß-Elements wird ebenfalls sichergestellt, daß die erfindungsgemäße Einrichtung sich durch Kombination verschiedener Elemente - wie Formfedern unterschiedlicher Charakterisitik und Prallplatten unterschiedlicher Größe -leicht
an die einzelnen Meßprobleme anpassen läßt.

Die im Anspruch 10 gekennzeichnete Anordnung von wenigstens zwei Sensoren, die unter einem Winkel, vorzugsweise
einem 90°-Winkel angeordnet sind, läßt sich nicht nur der
Massenimpulsstrom, sondern auch die Richtungsabhängigkeit
des Stroms ermitteln und/oder den Einfluß von Störgrößen
(Temperatur etc.) eliminieren.

In den Ansprüchen 11 folgende sind Sensoren gekennzeichnet, die in Verbindung mit der erfindungsgemäßen Einrichtung verwendet werden können:

Prinzipiell kann die Auslenkung des durch die Strömung verformten Meßelements sowohl absolut als auch relativ zu
einem hinter bzw. in dem Meßelement angeordneten Referenzelement mit beliebigen Verfahren erfaßt werden. Beispielsweise ist es möglich, optische Sensoren zu verwenden, die
die Auslenkung des Meßelements bzw. den Abstand zwischen
den beiden Elementen über ein Schattenbildverfahren oder
dergleichen messen. Ferner kann der Sensor beispielsweise
ein magnetfeldempfindlicher Aufnehmer sein; dies hat den
Vorteil, daß ein direkt weiterverarbeitbares analoges
Ausgangssignal zur Verfügung steht.

Weitere bevorzugte Möglichkeiten für die Ausbildung des
Sensors sind in den Ansprüchen 11f. gekennzeichnet. Die
Erfassung der Auslenkung beziehungsweise der Verformung
der Meßplatte mit einem auf der Meß-Platte aufgebrachten
bzw. in das Meßrohr eingebrachten Oberflächenwellen-Filter
erlaubt eine sehr genaue Erfassung der Auslenkung durch
die "Verstimmung" des Filters (Anspruch 11).

Ferner ist es auch möglich, den Sensor aus einem piezoelektrischen und/oder magnetoelastischen Material zu fertigen, ein derartiges Material auf den Sensor aufzubringen
oder in den (beispielsweise ! als Rohr ausgebildeten)
Sensor einzubringen (Anspruch 12 bzw. 19). Mittels eines
derartigen Sensors ist auch eine direkte Erfassung der
Verformung der Meß-Platte möglich, ohne daß eine Referenz
verwendet werden müßte.

Ferner ist es gemäß Anspruch 13 möglich, wenigstens eine
Spule vorzusehen und deren durch die Auslenkung des Meß-
Elements hervorgerufene Impedanzänderung zu erfassen. Auch
ist es möglich, mehrere Spulen vorzusehen, deren Kopplungsfaktor sich bei einer Auslenkung des Meßelements
ändert, und diese Änderung zu erfassen (Anspruch 14).

0 253 097

In jedem Falle ist es besonders vorteilhaft, wenn die
Spulen, die auf einer oder beiden Elementen aufgebracht
sind, geätzte Flachspulen (Anspruch 15) sind.

Durch die im Anspruch 16 gekennzeichnete Ausbildung des
Sensors wird erreicht, daß sich elektrische Ströme, die in
den Kondensatoren aufgrund des sich zwischen den Elementen
befindlichen Mediums fließen, gegenseitig aufheben.

Im Anspruch 17 ist eine weitere Realisierung des allgemeinen Erfindungsgedankens gekennzeichnet, bei der die Auslenkung des Meß-Elements gegen die Kraft einer Feder bestimmt wird. Dabei ist es insbesondere von Vorteil, wenn
die Verkürzung der Feder direkt bestimmt wird, wie dies
beispielsweise im Deutschen Patent 32 05 705 beschrieben
ist. Die Referenzplatte kann dabei so strömungsgünstig
ausgebildet sein, daß sie die Strömung des Mediums praktisch nicht behindert. Im Extremfall kann die Referenzplatte aus einem hinter der Prallplatte angeordneten Teilstück bestehen, das an senkrecht zur Strömung angeordneten
"steifen" Federn aufgehängt ist.

Durch die im Anspruch 18 gekennzeichnete Anordnung mehrerer gegebenenfalls unterschiedlicher Sensoren können bestimmte Kennlinien realisiert werden.

Die Erfindung wird nachstehend anhand von Ausführungsbeispielen unter Bezugnahme auf die Zeichnung näher beschrieben, in der zeigen:

Fig. 1 ein erstes Ausführungsbeispiel in Vorderansicht
        und Aufsicht,

Fig. 2 a und b zwei Varianten eines zweiten Ausführungsbeispiels im Schnitt, und

Fig. 3 ein drittes Ausführungsbeispiel, bei dem eine
Richtungsbestimmung erfolgt, in Seitenansicht und
Aufsicht.

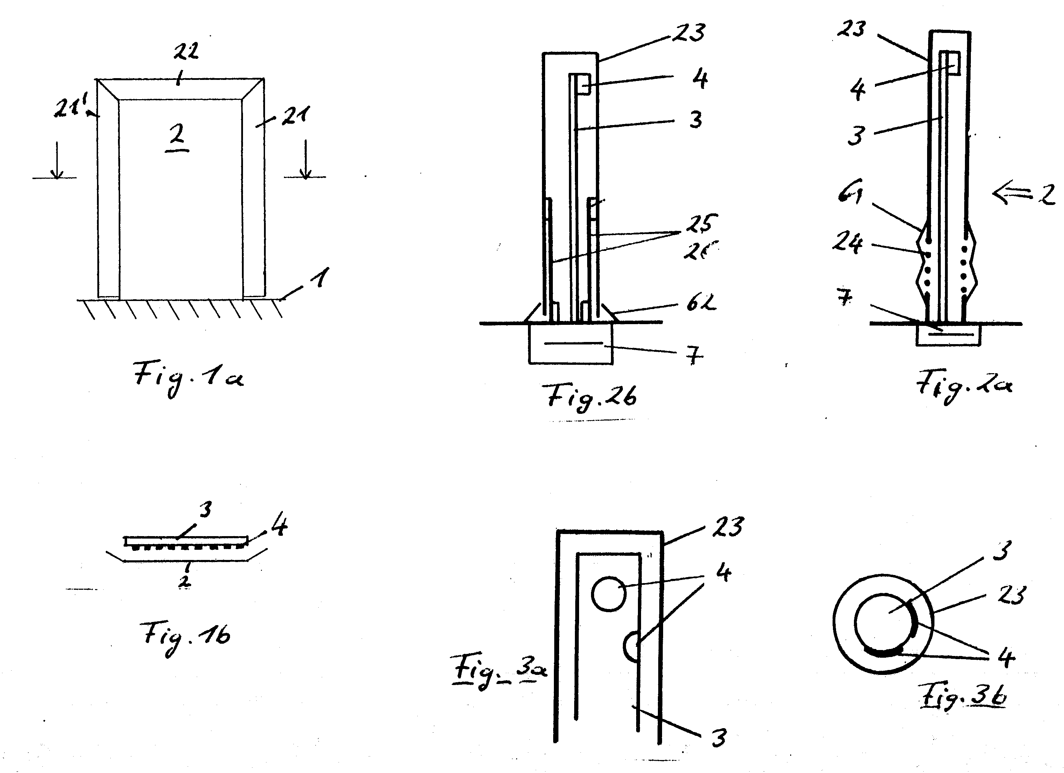

Fig. 1 zeigt ein erstes Ausführungsbeispiel. In einem von
dem Medium, dessen Massenimpulsstrom gemessen werden soll,
durchströmten Rohr 1 sind ein als Meß-Platte ausgebildetes
Meß-Element 2 und eine Referenzplatte 3 angeordnet. Auf
der Referenzplatte 3 ist ein Aufnehmerelement bzw. ein
Sensor 4 vorgesehen.

Bei dem in Fig. 1a und 1b gezeigten Ausführungsbeispiel
ist die Meß-Platte 2 einseitig mittels einer als Halterung
dienenden Formfeder 5 gehalten. Durch die Gestaltung der
Formfeder 5 und die Größe der "Prallfläche" ist die Auslenkung des Meß-Elements 2 bei einem bestimmten Massenimpulsstrom gegeben; ferner ist durch die Anordnung der das
Aufnehmerelement 4 tragenden Referenzplatte 3 der Ruheabstand zwischen den beiden Elementen festgelegt.

Das Meß-Element 2 weist - wie insbesondere Fig. 1b zu
entnehmen ist - in Richtung auf das Referenzelement 3
umgebogene Seitenteile 21, 21' und 22 auf, die als "Strömungsschilde" dienen, so das Referenzelement nicht durch
die Strömung beaufschlagt wird. Ferner können durch diese
Gestaltung des Referenzelements auch keine turbulenten
Verwirbelungen zwischen den beiden Elementen auftreten,
durch die Ablagerungen gebildet oder ungleichmäßige Verformungen hervorgerufen werden.

Das erfindungsgemäß ausgebildete Meßelement läßt sich leicht als Stanzteil herstellen. Ferner kann das Meß-Element auch ein Teil eines längs seiner Achse geteilten Rohrs sein.

Die Fig. 2a und 2b zeigen einen Querschnitt durch ein zwei Varianten eines zweiten Ausführungsbeispiels der Erfindung. Beiden Varianten ist gemeinsam, daß das Meß-Element 2 ein einseitig geschlossenes Rohr 23 aufweist, das das Referenzelement 3 und den Sensor 4 vollständig umgibt und gegen das strömende Medium abschirmt.

Das Rohr 23 ist an der Wand des Kanals 1, in dem das Medium strömt, bei der in Fig. 2a gezeigten Variante mittels einer Schraubenfeder 24 und bei der in Fig. 2b gezeigten Variante mittels zweier Biegefedern 25 und 26 befestigt. Sowohl die Schraubenfeder 24 als auch die Biegefedern 25 und 26 stellen eine Weichstelle dar, die durch die Strömung wesentlich stärker (relativ) verformt wird als das von ihnen getragene Rohr. Die Auslenkung des freien (geschlossenen) Rohrendes 27 wird also im wesentlichen durch die Verformung der Federn 24 bis 26 bestimmt.

Um ein Eindringen des Mediums in das Rohrinnere, in dem das Referenzelement 3 und der oder die Sensoren 4 angeordnet sind, zu verhindern, sind einmal ein Faltenbalg 61 und einmal ein Leitblech 62 vorgesehen, das in Form einer Manschette ausgebildet ist. Mit dem Bezugszeichen 7 ist ferner angedeutet, daß die Steuer- und Auswerteelektronik für die Sensoren 4 am Sensor beispielsweise unter der Kanalwand befestigt werden kann.

Die in den Fig. 2a und 2b gezeigte Anordnung hat den Vorteil, daß das Referenzelement und der oder die Sensoren vollständig durch das Meß-Element gekapselt sind, so daß sie nicht nur äußere Einflüsse beeinträchtigt werden.
Darüberhinaus kann die Charakteristik der Einrichtung
leicht durch entsprechende Bemessung der Biegefestigkeit
der Weichstelle "eingestellt" werden. Ferner ergibt sich
insbesondere beim Einsatz von Biegefedern eine Auslenkung
des Rohr 23 weitgehend in Form eines "Parallelversatzes",
der leicht durch Sensoren 4 erfaßt werden kann.

Selbstverständlich ist es nicht nur möglich, einen Sensor
vorzusehen. Mit zwei oder mehr Sensoren, die gegeneinander
versetzt angeordnet sind, kann auch die Richtung der Strömung erfaßt werden. Ein bevorzugtes Ausführungsbeispiel,
bei dem zwei Sensoren unter einem 90°-Winkel versetzt
angeordnet sind, zeigen in Seitenansicht und im Schnitt
die Fig. 3a bzw. 3b. Ausdrücklich wird aber darauf hingewiesen, daß es nicht zwingend ist, die Sensoren unter
einem 90°-Winkel anzuordnen, es können selbstverständlich
auch andere Winkel gewählt werden.

Im folgenden soll auf die Arbeitsweise der erfindungsgemäßen Einrichtungen eingegangen werden:

Die Änderung des Impulses I eines strömenden Mediums führt
zu einer Kraft auf die die Änderung bewirkende Fläche
gemäß folgender Gleichung:

$$F = v^2 A \rho (1 - \cos \beta) = v (1 - \cos \beta) dm/dt$$

Hierbei bedeuten:

$\rho$     die Dichte des Mediums
A     die angeströmte Fläche
v     die mittlere Strömungsgeschwindigkeit
$\beta$     den Abströmwinkel der Strömung von der Formfeder
dm/dt     den Massenstrom
F     die Kraft auf die Formfeder

Unter der Annahme einer gleichverteilten Strömung bewirkt die Kraft eine gleichverteilte Flächenbelastung der Formfeder bzw. der "auf eine Ebene projizierten Rohrfläche".

Es ergibt sich folgende Auslenkung der Formfeder:

$$x = c_1 \varrho v^2 A = c_2 v \, dm/dt$$

mit $c_1$ und $c_2$ als von der gewählten Ausführung abhängigen Skalierungsfaktoren. Sie berücksichtigten auch das Verhältnis von aktiver Meßfläche der Formfeder zur aktiven Gesamtfläche des Meßrohres.

Für das in Fig. 1 dargestellte Ausführungsbeispiel ergibt sich folgende Näherung für die Gesamtkennlinie als Funktion der Auslenkung x der Meß-Platte (Formfeder) F:

1. Induktives Aufnehmerelement mit LC-Oszillator

$$L \sim \sqrt{(x_0 - x)}$$

$$f \sim \sqrt{(1/LC)}$$

$$f \sim 1/\sqrt{(C(x_0-x)^{-\frac{1}{2}})}$$

2. Kapazitives Aufnehmerelement mit LC-Oszillator

$$C \sim 1/(x_0 - x)$$

$$f \sim 1/\sqrt{(LC)}$$

$$f \sim \sqrt{((x_0 - x)/L)}$$

Hierin bedeuten:

L Induktivität
C Kapazität
x Auslenkung der Formfeder
$x_0$ Grundabstand
$f$ Frequenz

Vorstehend ist die Erfindung anhand von Ausführungsbeispielen beschrieben worden. Innerhalb des allgemeinen
Erfindungsgedankens sind selbstverständlich die verschiedensten Modifikationen möglich:

Bei den gezeigten Ausführungsbeispielen wird die Meß-
Platte vom Medium in etwa senkrecht angeströmt. Es ist
aber auch möglich, die Platten unter einem Winkel zur
Strömungsrichtung einzusetzen, so daß die Anordnung strömungsgünstig ausgebildet ist.

Die Meß-Element können nicht nur einseitig eingespannt
sein wie bei den gezeigten Ausführungsbeispielen, sondern
auch beidseitig. Ferner ist es möglich, die Meß-Elemente
an dem Referenzelement und nicht an der Rohrwand zu befestigen.

Der Sensor bzw. Aufnehmer kann nicht nur auf dem Referenzelement, sondern auch auf dem Meß-Element aufgebracht oder
auch in einem der Elemente eingebracht sein. Ferner kann
auch ein Element vollständig aus dem Sensormaterial bestehen (Anspruch 19).

Die im strömenden Medium hinter der Meß-Platte bzw. in dem
Meß-Element angeordnete Referenzplatte hat darüber hinaus
auch noch den Vorteil, daß sie zur Aufnahme weiterer Elemente, beispielsweise einer Auswerteelektronik, von Betätigungselementen wie Drosselklappen, Mikroventilen etc.

oder sonstigen Stellgliedern dienen kann. Die Referenzplatte kann darüber hinaus auch zur strömungsgünstigen
Einleitung eines zusätzlichen Fluidstroms benutzt werden,
dessen Größe beispielsweise in Abhängigkeit vom Massenimpulsstrom des strömenden Mediums geregelt bzw. gesteuert
wird.

<u>P a t e n t a n s p r ü c h e</u>

1. Einrichtung zur Messung des Massenimpulsstroms eines strömenden Mediums mit

einem Meß-Element, das in das strömende Medium eingesetzt ist, und das durch das strömende Medium ausgelenkt bzw. verformt wird,

einem Referenzelement, das im Strömungsweg wenigstens teilweise hinter dem Meß-Element angeordnet ist, und einem Sensor, der zur Bestimmung des Massenimpulsstroms den Abstand zwischen dem Meß-Element und Referenzelement erfaßt,

dadurch **gekennzeichnet**, daß das Meß-Element eine Formgebung aufweist, die eine Verformung des Referenzelements durch die Strömung im wesentlichen verhindert.

2. Einrichtung nach Anspruch 1,
dadurch **gekennzeichnet**, daß das Meß-Element aus einer Platte besteht, deren seitliche Bereiche in Richtung auf das Referenzelement umgebogen sind.

3. Einrichtung nach Anspruch 1,
dadurch **gekennzeichnet**, daß das Meß-Element ein wenigstens einseitig gehaltenes geschlossenes Rohr ist, in dessen Innerem das Referenzelement angeordnet ist.

4. Einrichtung nach einem der Ansprüche 1 bis 3,
dadurch **gekennzeichnet**, daß das Meß-Element mehrgliedrig ausgebildet ist, und daß die einzelnen Abschnitte des Meß-Elements unterschiedliche Biegefestigkeit aufweisen.

5. Einrichtung nach Anspruch 4,
dadurch **gekennzeichnet,** daß das Meß-Element im Bereich der
Halterung eine Weichstelle aufweist.

6. Einrichtung nach Anspruch 4 oder 5,
dadurch **gekennzeichnet,** daß eine Schraubenfeder, eine
Formfeder, ein Federbalg oder dgl. eine Weichstelle und
insbesondere die Weichstelle im Bereich der Halterung
bilden.

7. Einrichtung nach einem der Ansprüche 4 bis 6,
dadurch **gekennzeichnet,** daß eine Manschette die Weichstelle zur Abdichtung umgibt.

8. Einrichtung nach Anspruch 7,
dadurch **gekennzeichnet,** daß ein Gummibalg und/oder ein
oder mehrere Leitbleche die Manschette bilden.

9. Einrichtung nach einem der Ansprüche 1 bis 8,
dadurch **gekennzeichnet,** daß zur Befestigung des Meß-
Elements mindestens eine Formfeder dient, die das eigentliche Prallelement in Form einer Platte, eines Rohrteils
oder eines Rohrstücks trägt.

10. Einrichtung nach einem der Ansprüche 1 bis 9,
dadurch **gekennzeichnet,** daß zur Erfassung von Strömungsrichtungen und/oder zum Eliminieren von Stör- und/oder
Einflußgrößen gegeneinander versetzte Sensoren vorgesehen
sind.

11. Einrichtung nach einem der Ansprüche 1 bis 10,
dadurch **gekennzeichnet,** daß der Sensor zur Erfassung der
Auslenkung der Meß-Platte ein Oberflächenwellen-Filter
ist.

12. Einrichtung nach einem der Ansprüche 1 bis 10,
dadurch **gekennzeichnet**, daß der Sensor ein piezoelektrisches und/oder magnetoelastisches Material aufweist.

13. Einrichtung nach einem der Ansprüche 1 bis 10,
dadurch **gekennzeichnet**, daß der Sensor eine auf dem Meß-Element oder dem Referenzlement aufgebrachte Spule (A) aufweist, deren durch die Auslenkung des Meß-Elements hervorgerufene Impedanzänderung erfaßt wird.

14. Einrichtung nach einem der Ansprüche 1 bis 10,
dadurch **gekennzeichnet**, daß der Sensor auf dem Meß-Element und/oder dem Referenzelement aufgebrachte Spulen aufweist und die durch die Auslenkung der Meß-Platte hervorgerufene Änderung des Kopplungsfaktors der Spulen erfaßt wird.

15. Einrichtung nach Anspruch 13 oder 14,
dadurch **gekennzeichnet**, daß die Spulen Flachspulen sind.

16. Einrichtung nach Anspruch 7,
dadurch **gekennzeichnet**, daß auf dem Referenzelement oder dem Meßelement zwei Kondensatorplatten aufgebracht sind, die mit dem anderen Element zwei in Serie geschaltete Kondensatoren bilden, deren Kapazitätsänderung erfaßt wird.

17. Einrichtung nach einem der Ansprüche 1 bis 10,
dadurch **gekennzeichnet**, daß das Meß-Element mittels wenigstens einer Schraubenfeder, deren Achse in etwa parallel zur Meßrichtung liegt, an dem Referenzplatte befestigt ist, und
daß die Auslenkung des Meß-Elements aus seiner Ruhelage über die Änderung der Impedanz der Schraubenfeder gemessen wird.

18. Einrichtung nach einem der Ansprüche 1 bis 17, dadurch **gekennzeichnet**, daß zur Realisierung einer gewünschten Sensorkennlinie mehrere unterschiedliche Sensoren parallel und/oder in Serie geschaltet sind.

19. Einrichtung nach einem der Ansprüche 1 bis 18, dadurch **gekennzeichnet**, daß Konstruktionselemente der Einrichtung, wie Referenz- und/oder Meß-Element als Sensor ausgebildet sind.

Fig.1a

Fig.1b

Fig.2a

Fig.2b

Fig.3a

Fig.3b

## EINSCHLÄGIGE DOKUMENTE

EP 87107115.5

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DD - A - 142 471 (REICHL) <br><br> * Seite 3; Zusammenfassung; Fig. * | 1,4-7, 9,13 | G 01 F 1/28 <br> G 01 P 5/04 |
| Y | | 10-12, 14,16, 19 | |
| | -- | | |
| Y | GB - A - 2 128 744 (HOLMES) <br><br> * Zusammenfassung, letzter Satz * | 10 | |
| | -- | | |
| Y | DE - A1 - 3 502 511 (THOMSON-CSF) <br><br> * Zusammenfassung; Fig. 1 * | 11 | |
| | -- | | |
| Y | FR - A1 - 2 538 118 (REDIES) <br><br> * Deckblatt * | 12,19 | |
| | -- | | **RECHERCHIERTE SACHGEBIETE (Int. Cl.4)** |
| D,Y | DE - A1 - 3 138 985 (AOA) <br><br> * Fig. 4,5 * | 14,16 | |
| | -- | | G 01 F 1/00 <br> G 01 P 5/00 |
| D,A | DE - C3 - 2 802 830 (MÜLLER) <br><br> * Gesamt * | 1,2,16 | G 01 L 1/00 |
| | ---- | | |

Der vorliegende Recherchenbericht wurde für alle Patentansprüche erstellt.

| Recherchenort | Abschlußdatum der Recherche | Prüfer |
|---|---|---|
| WIEN | 23-07-1987 | BURGHARDT |